# EUROPÄISCHE PATENTSCHRIFT

(11) **EP 0 991 171 B1**
(45) Veröffentlichungstag und Bekanntmachung des Hinweises auf die Patenterteilung: **10.12.2003**
(21) Anmeldenummer: 99890311.6
(22) Anmeldetag: 28.09.1999
(51) Int. Cl.: H02M 3/335

(54) **Sperrwandler**
Flyback converter
Convertisseur à récupération

(30) Priorität: 30.09.1998 AT 163198
(43) Veröffentlichungstag der Anmeldung: 05.04.2000
(73) Patentinhaber: Siemens AG Österreich, 1210 Wien (AT)
(72) Erfinder: Weinmeier, Harald, 1210 Wien (AT); Marka, Günter, 1120 Wien (AT)
(74) Vertreter: Matschnig, Franz, Dipl.-Ing.

(56) Entgegenhaltungen:
- AT-B- 403 535
- US-A- 4 736 264

## Beschreibung

Die Erfindung bezieht sich auf einen Sperrwandler mit einem Übertrager, mit einer Primärwicklung sowie mit zumindest einer Sekundärwicklung, wobei die Primärwicklung in Serie mit einem gesteuerten Schalter an einer Eingangsgleichspannung liegt und der Sekundärwicklung ein Gleichrichter und ein Ladekondensator nachgeschaltet sind, mit einer Ansteuerschaltung, welche für den Schalter Startimpulse fester Frequenz liefert, mit einem Stromfühler für den Strom durch die Primärwicklung, mit einem ersten Regelverstärker zum Vergleich der Ausgangsspannung mit einem einstellbaren Spannungsreferenzwert und mit einem zweiten Regelverstärker zum Vergleich des Ausgangsstromes mit einem einstellbaren Stromreferenzwert, wobei als Stellsignal die zusammengeführten und entkoppelten Ausgangssignale der beiden Regelverstärker sowie das Ausgangssignal des Stromfühlers der Ansteuerschaltung zur Beeinflussung des Tastverhältnisses zugeführt sind, und die Maximalleistung des Wandler-Primärteils geringer ist als das Produkt von maximal einstellbarer Ausgangsspannung und maximal einstellbaren Ausgangsstrom.

Sperrwandler dieser Art sind bekannt und werden in großem Umfang als Netzteile zur Stromversorgung elektronischer Geräte eingesetzt. Beispielsweise ist ein solcher Sperrwandler in der AT 403 535 B der Anmelderin zum Stand der Technik beschrieben. Ein maßgeblicher Kostenfaktor für solche Netzgeräte ist die entnehmbare Leistung, da diese vor allem die Kosten für den Übertrager und Glatterungsmittel, wie Kondensatoren und Drosseln bestimmt. Ein Netzgerät einer Bauart soll andererseits möglichst viele Anwendungsfälle abdecken, die unterschiedliche Spannungen und Ströme erfordern. Aus diesem Grunde werden die Netzgeräte mit einstellbarer Spannung und einstellbarem Strom geliefert, z. B. maximal 30 Volt, 3 Ampere. Innerhalb dieser Grenzen kann der Käufer dann Strom und Spannung einstellen, wobei das Netzgerät leistungsmäßig aber nur bei der höchsten Spannung voll genutzt wird, hier 30 Volt * 3 Ampere = 90 Watt. Stellt der Käufer hingegen das Gerät auf eine niedrigere Spannung ein, z. B. auf 3 Volt, so steht ihm nur ein Bruchteil der Leistung zur Verfügung, nämlich in dem vorliegenden Beispiel 3 Volt * 3 Ampere = 9 Watt. Das Gerät ist leistungsmäßig nicht ausgenutzt, hier nur zu einem Zehntel, und für die betreffende Anwendung unnötig teuer.

Eine Aufgabe der Erfindung liegt darin, diese Nachteile zu beheben und ein Netzgerät zu schaffen, das auch bei individueller Einstellung von Strom und Spannung durch den Kunden seine volle Leistung nutzt.

Diese Aufgabe wird ausgehend von einem Sperrwandler der eingangs genannten Art dadurch gelöst, daß erfindungsgemäß die maximal einstellbaren Referenzwerte den Spannungs- und den Stromwerten entsprechen, mit welchen der Sekundärteil maximal belastbar ist und die Höhe des Stellsignals durch einen Begrenzer begrenzt ist, wobei der Einsatzpunkt des Begrenzers so gewählt ist, daß ein maximaler Abschaltstrom im Primärkreis entsprechend der maximal zulässigen Leistungsbelastung des Primärkreises festgelegt ist.

Die Erfindung schafft einen Sperrwandler, bei welchem die Leistung nicht mehr durch den Maximalstrom bei der größten Spannung begrenzt ist, wobei auch bei kleineren Spannungen die volle Leistung und damit auch ein höherer Strom zur Verfügung steht. Die Lösung ist auch einfach und billig, da bei einem fixfrequenten Sperrwandler die zur Sekundärseite übertragene Leistung nur von der Frequenz und dem Primärstrom abhängt und es zur Leistungsbegrenzung genügt, den Schaltstrom zu begrenzen. Es genügt, den Primärteil samt Übertrager auf die maximale Leistung zu dimensionieren, und lediglich der weniger aufwendige Sekundärteil muß sowohl auf den maximalen Strom als auch auf die maximale Spannung dimensioniert sein.

Eine besonders einfache Variante sieht vor, daß der Begrenzer eine Zenerdiode ist.

Eine praxisgerechte, mit geringem Aufwand realisierbare Variante sieht vor, daß die Ausgänge der beiden Regelverstärker über Dioden und einen Pull-Up-Widerstand entkoppelt sind.

Zweckmäßig ist es auch, wenn das Ausgangssignal des Stromfühlers einem Eingang und das Regelsignal dem anderen Eingang eines dritten Komparators zugeführt ist, dessen Ausgang mit dem reset-Eingang eines den Schalter ansteuernden Flip-Flop verbunden ist, wobei an dem set-Eingang Impulse konstanter Frequenz liegen, da diese Realisierung mit nur wenigen Bauteilen das Auslangen findet.

Schließlich ist es im Sinne einer preiswerten Lösung auch empfehlenswert, wenn der Stromfühler ein Widerstand ist.

Die Erfindung samt weiterer Vorteile ist im folgenden anhand einer beispielsweisen Ausführungsform näher erläutert, die in der Zeichnung veranschaulicht ist. In dieser zeigt die einzige Figur eine stark schematisierte Schaltung eines Sperrwandlers nach der Erfindung.

Der in der Figur gezeigte Sperrwandler nach der Erfindung besitzt einen Übertrager Tᵣ mit einer Primärwicklung Wₚ und einer Sekundärwicklung Wₛ, wobei sekundärseitig ein Gleichrichter Dₛ, z. B. eine einzelne Diode oder ein Brückengleichrichter, sowie ein Ladekondensator Cₛ vorgesehen sind. An dem Ladekondensator liegt die Ausgangsspannng Uₛ und der durch eine Last R₁ bedingte Ausgangsstrom Iₛ fließt über einen Sensorwiderstand Rₛ.

Auf die Primärseite des Sperrwandlers zurückkommend erkennt man, daß eine Netzwechselspannung Uₙ mittels eines Gleichrichters Dₚ gleichgerichtet und als Primärgleichspannung Uₚ an einem Primärkondensator Cₚ liegt. Ein Filter Fᵢ kann gleichfalls in bekannter Weise vorgesehen sein, um den Rückfluß von Störungen in das Netz zu verhindern bzw. zu verringern.
Die Primär- oder Eingangsgleichspannung Uₚ liegt über einem gesteuerten Schalter T, hier ein Schalttransistor, an der Primärwicklung Wₚ des Übertragers Tᵣ, wobei in diesem Serienkreis noch ein Stromfühler Rₚ angeordnet ist. Zur Ansteuerung des Schalters T dient eine als ganze mit A bezeichnete Ansteuerschaltung, welche im vorliegenden Ausführungsbeispiel ein Flip-Flop FF, einen Frequenzgenerator FG, einen Komparator K sowie eine Zenerdiode D_{z} mit euber Zenerspannung U_{z} als Begrenzer enthält. Die Impulse des Frequenzgenerators FG sind dem set-Eingang des Flip-Flop zugeführt und veranlassen den Start einen Schaltimpulses, wobei jeder Impuls wieder durch ein Signal an dem reset-Eingang des Flip-Flop FF beendet wird. Das Tastverhältnis des entstehenden Impulses bestimmt den Strom durch den Schalter T, die Primärwicklung Wₚ und den Stromfühler Rₚ, wobei im stationären Betrieb der über den Stromfühler Rₚ gemessene, im wesentlichen linear ansteigende Strom ab einem gewissen Pegel, nämlich der an dem nicht invertierenden Eingang des Komparators K anliegenden Spannung, zu einem Rücksetzen des Flip-Flop und einer Beendigung des Schaltimpulses führt.

Nun wieder auf die Sekundärseite zurückkommend erkennt man, daß die Ausgangsspannung Uₛ in einem ersten Regelverstärker Kᵤ mit einem einstellbaren Spannungs-Referenzwert U_{RefU} verglichen wird. Gleiches geschieht mit dem an dem Widerstand Rₛ gemessenen Strom Iₛ, der in einem zweiten Regelverstärker Kₛ mit einem Referenzwert U_{RefI}, der gleichfalls einstellbar ist, verglichen wird. Die Ausgänge der beiden Regelverstärker Kᵤ und Kₛ werden über Entkopplungsdioden Dᵤ und Dₛ dem nicht invertierenden Eingang des Komparators K als Stellsignal s_{z} zugeführt, wobei die miteinander verbundenen Anoden beider Dioden über einen Pull-up Widerstand R_{H} an einer Hilfsgleichspannung U_{H} liegen und die Zenerdiode D_{Z} bedingt, daß eine gewisse Maximalspannung an diesem Eingang nicht überschritten werden kann. Im vorliegenden Fall möge die Zenerspannung U_{Z} = 10 V und die Hilfsspannung U_{H} = 25 V betragen.

Im Betrieb kann die Ausgangsspannung Uₛ über die einstellbare Referenzspannungsquelle U_{RefU} in weiten Grenzen eingestellt werden und ebenso der Strom Iₛ mit Hilfe der Referenz U_{RefI}, wobei im allgemeinen die Einstellung des Stromes als Strombegrenzung dient und mit konstanter Spannung Uₛ gearbeitet wird. Um nun die Maximalleistung, die in erster Linie durch die Dimensionierung des Übertragers Tᵣ, weiters aber auch durch die Dimensionierung weit anderer Bauteile, wie des Schalters T und des Kondensators Cₚ gegeben ist, im Betrieb nicht zu überschreiten, ist gemäß der Erfindung die Zenerdiode D_{z} als Begrenzer vorgesehen. Im normalen Betrieb, bei welchem der Maximalleistungswert nicht überschritten wird, wird im allgemeinen die Spannungsregelung im Einsatz sein, und an dem Ausgang des Regelverstärkers Kᵤ ein bestimmter Spannungswert liegen, der jedoch unter der Zenerspannung U_{Z} der Diode D_{z} liegt. Wird nun bei einer vorgegebenen Spannung der Strom erhöht, beispielsweise weil sich der Lastwiderstand Rₗ erniedrigt, oder weil die Referenzspannung U_{RefI} vergrößert wird, so wird die Spannungsregelung nachregeln, um die nun höhere Belastung auszugleichen, d.h. die Ausgangsspannung an dem Regelverstärker Kᵤ wird ansteigen. Ab einem gewissen Strom wird diese Ausgangsspannung so hoch sein, daß die Zenerdiode D_{z} leitend wird, wodurch auch die Länge der Schaltimpulse und der Primärstrom, damit aber auch die übertragene Leistung entsprechend begrenzt wird. Der analoge Fall tritt ein, wenn dem Netzgerät ein konstanter Strom entnommen und dann die Spannung erhöht wird.

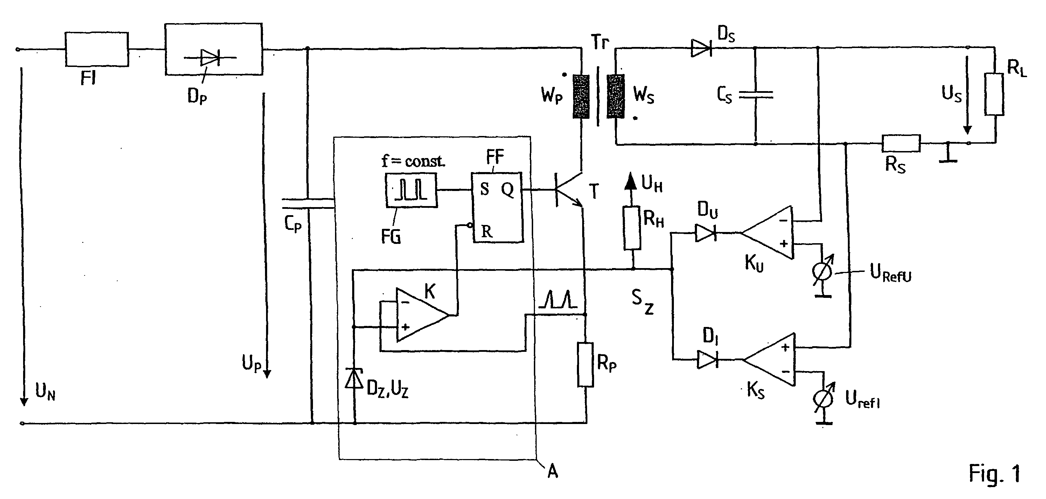

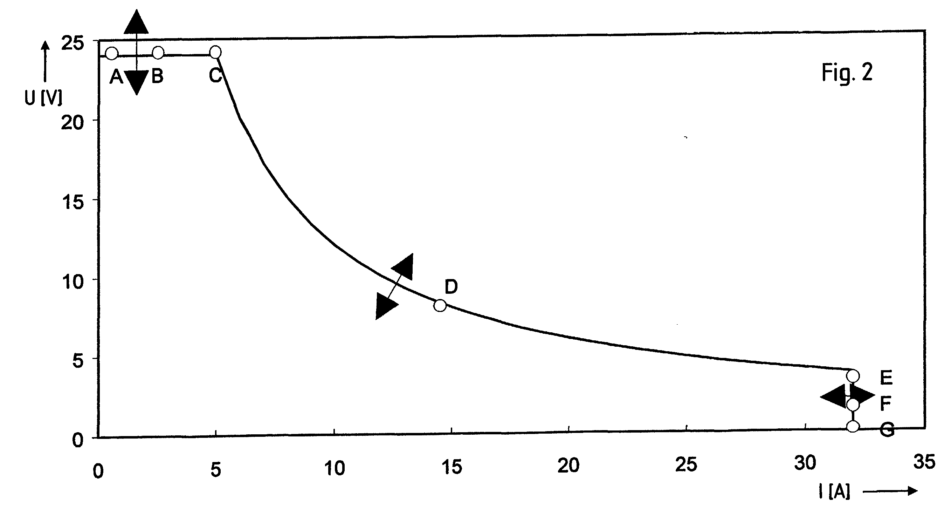

Nachstehend wird auf Fig. 2 Bezug genommen, welche in einem Diagramm die Grenzen von maximal einstellbarer Ausgangsspannung bzw. Ausgangsstrom darstellt. Anhand dieses Diagramms sei an einem konkreten Beispiel die Erfindung nochmals erläutert. In einem Arbeitspunkt links oben in dem Diagramm sei die Spannung auf ein Maximum eingestellt, wobei sich der Ausgang des Regelverstärkers K_{U} für die Spannung auf einem Potential von 1 V befindet, hingegen der Ausgang des Regelverstärkers K_{S} für den Strom in der positiven Aussteuergrenze liegt. Das Stellsignal U_{S} beträgt etwas 1,7 V. In dem Arbeitspunkt P weist der Ausgang des Regelverstärkers K_{U} eine Spannung von etwa 5 V auf, der Ausgang des Regelverstärkers K_{S} für den Strom befindet sich nach vor in der positiven Aussteuergrenze und das Stellsignal beträgt 5,7 V. Im Arbeitspunkt C liegt der Ausgang des Regelverstärkers K_{U} für die Spannung auf einem Potential von etwa 9,3 V, der Ausgang des Regelverstärkers K_{S} für den Strom liegt nach vor in der positiven Aussteuergrenze und das Stellsignal beträgt 10 V.

Im Arbeitspunkt D ist der Ausgang des Regelverstärkers K_{U} für die Spannung mittlerweile in seine positive Aussteuergrenze gelangt, ebenso befindet sich der Ausgang des Regelverstärkers K_{S} für den Strom in der positiven Aussteuergrenze und das Stellsignal ist durch die Zenerdiode DZ auf 10 V begrenzt. Der Arbeitspunkt D befindet sich auf der Leistungshyperbel, die nach rechts hin im Arbeitspunkt E ihr Ende findet. Der Ausgang des Regelverstärkers K_{U} für die Spannung liegt nach wie vor in der positiven Aussteuergrenze, der Ausgang des Regelverstärkers K_{S} für den Strom liegt hingegen auf einem Potential von etwa 9,3 V und das Stellsignal beträgt noch immer 10 V. Im Arbeitpunkt F liegt der Ausgang des Regelverstärkers K_{U} für die Spannung noch immer in der positiven Aussteuergrenze, der Ausgang des Regelverstärkers K_{S} für den Strom hingegen nur noch auf einem Potential von etwa 2 V und das Stellsignal beträgt 2,7 V. Im Arbeitspunkt G liegt der Ausgang des Regelverstärkers K_{U} für die Spannung in der positiven Aussteuergrenze, der Ausgang des Regelverstärkers K_{S} für den Strom liegt auf einem Potential von etwa 1 V und das Stellsignal beträgt 1,7 V.

Es ist für den Fachmann auf dem Gebiet von Schaltnetzteilen offensichtlich, daß die Ansteuerschaltung A auch in anderer Weise realisiert werden kann, solange nur die Höhe des mit s_{z} bezeichneten Stellsignals, das von den entkoppelten Ausgängen der Regelverstärker Kᵤ und Kₛ stammt, begrenzt wird. Der Begrenzer kann auch anders als mit einer Zenerdiode D_{z} realisiert werden. Die Regelverstärker Kᵤ und Kₛ, die hier als unbeschaltete Differenzverstärker gezeichnet sind, werden im allgemeinen mit zusätzlichen Schaltelementen, insbesondere RC-Gliedern zur Erreichung der gewünschten Regelcharakteristik beschaltet sein, und ebenso wird in vielen Fällen das Stellsignal s_{z} mit Hilfe eines Optokopplers galvanisch zwischen Primär- und Sekundärseite getrennt sein.

Dank der Erfindung kann ein Sperrwandler nach der Erfindung in einem gewissen Leistungsbereich universell verwendet werden, da es dem Anwender freisteht, die Spannung bzw. den Strom entsprechend den Erfordernissen zu wählen, wobei jedoch immer die maximal mögliche Leistung zur Verfügung steht. Auf diese Leistung muß der Primärteil des Sperrwandlers dimensioniert sein, wogegen bei Dimensionierung des Sekundärteils lediglich auf den maximal auftretenden Strom bzw. die maximal auftretende Spannung geachtet werden muß.

## Patentansprüche

1. Sperrwandler mit einem Übertrager (Tᵣ), mit einer Primärwicklung (Wₚ) sowie mit zumindest einer Sekundärwicklung (Wₛ), wobei die Primärwicklung in Serie mit einem gesteuerten Schalter (T) an einer Eingangsgleichspannung (Uₚ) liegt und der Sekundärwicklung ein Gleichrichter (Dₛ) und ein Ladekondensator (Cₛ) nachgeschaltet sind, mit einer Ansteuerschaltung (A), welche für den Schalter Startimpulse liefert, mit einem Stromfühler (Rₚ) für den Strom durch die Primärwicklung, mit einem ersten Regelverstärker (Kᵤ) zum Vergleich der Ausgangsspannung (Uₛ) mit einem einstellbaren Spannungsreferenzwert (U_{RefU}) und mit einem zweiten Regelverstärker (K_{S}) zum Vergleich des Ausgangsstromes (Iₛ) mit einem einstellbaren Stromreferenzwert (U_{RefI}), wobei als Stellsignal s_{z} die zusammengeführten und entkoppelten Ausgangssignale der beiden Regelverstärker sowie das Ausgangssignal des Stromfühlers der Ansteuerschaltung zur Beeinflussung des Tastverhältnisses zugeführt sind, und die Maximalleistung des Wandler-Primärteils geringer ist als das Produkt von maximal einstellbarer Ausgangsspannung (U_{Amax}) und maximal einstellbaren Ausgangsstrom (I_{Amax}),
**dadurch gekennzeichnet, dass**
die maximal einstellbaren Referenzwerte (U_{RefU}, U_{RefI}) den Spannungs- und den Stromwerten entsprechen, mit welchen der Sekundärteil maximal belastbar ist, und
die Höhe des Stellsignals (s_{z}) durch einen Begrenzer (D_{z}) begrenzt ist, wobei der Einsatzpunkt (U_{z}) des Begrenzers so gewählt ist, daß ein maximaler Abschaltstrom im Primärkreis entsprechend der maximal zulässigen Leistungsbelastung des Primärkreises festgelegt ist.

2. Sperrwandler nach Anspruch 1, **dadurch gekennzeichnet, dass** der Begrenzer eine Zenerdiode (D_{z}) ist.

3. Sperrwandler nach Anspruch 1 oder 2, **dadurch gekennzeichnet, dass** die Ausgänge der beiden Regelverstärker (K_{U}, K_{S}) über Dioden (D_{U}, D_{I}) und einen Pull-Up-Widerstand (R_{H}) entkoppelt sind.

4. Sperrwandler nach einem der Ansprüche 1 bis 3, **dadurch gekennzeichnet, dass** das Ausgangssignal des Stromfühlers (Fₚ) einem Eingang und das Regelsignal dem anderen Eingang eines den Schalter (T) ansteuernden Flip-Flop (FF) verbunden ist, wobei an dem set-Eingang Impulse konstanter Frequenz liegen.

5. Sperrwandler nach Anspruch 1 bis 4, **dadurch gekennzeichnet, daß** der Stromfühler (Rₚ) ein Widerstand ist.

## Claims

1. Flyback converter having a transformer (Tᵣ), having a primary winding (Wₚ) and having at least one secondary winding (Wₛ), wherein the primary winding is connected in series with a controlled switch (T) to an input direct voltage (Uₚ), and a rectifier (Dₛ) and a charging capacitor (Cₛ) are connected downstream of the secondary winding, having a control circuit (A) which provides starting pulses for the switch, having a current sensor (Rₚ) for the current through the primary winding, having a first regulating amplifier (Kᵤ) for comparison of the output voltage (Uₛ) with an adjustable voltage reference value (U_{RefU}) and having a second regulating amplifier (Kₛ) for comparison of the output current (Iₛ) with an adjustable current reference value (U_{RefI}), wherein, as a setting signal s_{z}, the combined and decoupled output signals of the two regulating amplifiers and the output signal of the current sensor are supplied to the control circuit in order to influence the pulse duty ratio, and the maximum power of the primary part of the converter is less than the product of the maximally adjustable output voltage (U_{Amax}) and maximally adjustable output current (I_{Amax}),
**characterised in that**
the maximally adjustable reference values (U_{RefU}, U_{RefI}) correspond to the voltage and current values with which the secondary part can be maximally loaded, and
the level of the setting signal (s_{z}) is limited by a limiter (D_{z}), wherein the point (U_{z}) at which the limiter is used is selected in such a way that a maximum cut-off current in the primary circuit is fixed corresponding to the maximally permissible power loading of the primary circuit.

2. Flyback converter as claimed in claim 1, **characterised in that** the limiter is a Zener diode (D_{z}).

3. Flyback converter as claimed in claim 1 or 2, **characterised in that** outputs of the two regulating amplifiers (Kᵤ, Kₛ) are decoupled via diodes (D_{U}, D_{I}) and a pull-up resistor (R_{H}).

4. Flyback converter as claimed in any one of claims 1 to 3, **characterised in that** the output signal of the current sensor (Fₚ) is connected to one input and the regulating signal is connected to the other input of a flip-flop (FF) controlling the switch (T), wherein there are pulses of a constant frequency at the set-input.

5. Flyback converter as claimed in claim 1 to 4, **characterised in that** the current sensor (Rₚ) is a resistor.

## Revendications

1. Convertisseur à oscillateur bloqué avec un transformateur (Tᵣ), avec un enroulement du circuit primaire (W_{P}) ainsi qu'avec au moins un enroulement du circuit secondaire (W_{S}), l'enroulement du circuit primaire étant soumis en série avec un commutateur (T) commandé, à une tension continue d'entrée (Uₚ), et un redresseur de courant (D_{S}) et un condensateur de charge (C_{S}) étant monté en aval de l'enroulement du circuit secondaire, avec un circuit de commande (A) qui délivre des impulsions de déclenchement pour le commutateur, avec un détecteur de courant (R_{P}) pour le courant à travers l'enroulement du circuit primaire, avec un premier amplificateur de réglage (Kᵤ) pour comparer la tension de sortie (U_{S}) avec une valeur de référence de la tension (U_{RefU}) réglable, et avec un second amplificateur de réglage (K_{S}) pour comparer le courant de sortie (I_{S}) avec une valeur de référence du courant (U_{RefI}) réglable, moyennant quoi, en guise de signal de réglage, les signaux de sortie réunis et découplés des deux amplificateurs de réglage ainsi que le signal de sortie du détecteur de courant sont amenés au circuit de commande pour influencer le taux d'impulsions, et moyennant quoi la puissance maximale de l'élément primaire du convertisseur est inférieure au produit de la tension de sortie (U_{Amax}) maximale réglable et du courant de sortie maximal réglable (I_{Amax}), **caractérisé en ce que** les valeurs de référence maximales réglables (U_{RefU}, U_{RefI}) correspondent aux valeurs de tension et de courant maximales que l'élément secondaire peut supporter au maximum, et **en ce que** l'intensité du signal de réglage (S_{Z}) est limité par un limiteur (D_{Z}), moyennant quoi le point de coupure du limiteur est choisit de manière à ce qu'un courant de rupture maximal dans le circuit primaire est déterminé en fonction de la charge par unité de puissance maximale admissible du circuit primaire.

2. Convertisseur à oscillateur bloqué selon la revendication 1, **caractérisé en ce que** le limiteur est une diode de Zener (D_{Z}).

3. Convertisseur à oscillateur bloqué selon l'une quelconque des revendications 1 ou 2, **caractérisé en ce que** les sorties des deux amplificateurs de réglage (K_{U}, Kₛ) sont découplées via des diodes (D_{U}, D_{I}) et une résistance pull-up (R_{H}).

4. Convertisseur à oscillateur bloqué selon l'une quelconque des revendications 1 à 3, **caractérisé en ce que** le signal de sortie du détecteur de courant (Fₚ) est relié à une entrée, et le signal de réglage à l'autre entrée d'un basculeur bistable (BB) qui commande le commutateur (T), moyennant quoi l'entrée d'initialisation est soumise à des impulsions d'une fréquence constante.

5. Convertisseur à oscillateur bloqué selon l'une quelconque des revendications 1 à 4, **caractérisé en ce que** le détecteur de courant (R_{P}) est une résistance.
